# EUROPEAN PATENT APPLICATION

(11) **EP 4 834 622 A1**
(43) Date of publication of application: **04.11.2026**
(21) Application number: 24909541.5
(22) Date of filing: 29.05.2024
(51) Int. Cl.: B60K 6/38, B60K 6/36, B60K 6/24, B60K 6/26

(54) **POWER SYSTEM AND VEHICLE**

(30) Priority: 29.12.2023 CN 202311873987; 29.12.2023 CN 202323671111 U
(71) Applicant: Guangzhou Automobile Group Co., Ltd., Guangzhou, Guangdong 511434 (CN)
(72) Inventor: ZHANG, Anwei, Guangzhou, Guangdong 511434 (CN); SHI, Guofei, Guangzhou, Guangdong 511434 (CN); ZHOU, Wentai, Guangzhou, Guangdong 511434 (CN); XIN, Faqiao, Guangzhou, Guangdong 511434 (CN); LU, Gang, Guangzhou, Guangdong 511434 (CN); XIE, Binquan, Guangzhou, Guangdong 511434 (CN)
(74) Representative: Metida
(86) International application number: PCT/CN2024/096101
(87) International publication number: WO 2025/138575

(57) **Abstract**

The present disclosure provides a power system and a vehicle. According to the power system, a first clutch (33) is disposed between a first transmission component (31) and a second transmission component (32) of a differential assembly (3), the first transmission component (31) is in transmission connection with a second motor (7), and the second transmission component (32) is in transmission connection with a first motor (8) through a second clutch (2). By controlling disengagement of the first clutch (33), the second motor (7) can independently control different wheels through the first transmission component (31), and the first motor (8) can independently control the different wheels through the second transmission component (32), respectively, achieving a distributed working mode. By controlling engagement of the first clutch (33), a running mode of centralized driving of the two wheels can be achieved. This allows the power system to achieve multiple working modes, and adapt to driving needs under different working conditions, thereby improving power performance and economy of the power system.

## Description

### TECHNICAL FIELD

The present disclosure relates to the technical field of vehicles, and in particular, to a power system and a vehicle.

### BACKGROUND

Existing power systems with distributed drive functions can only enable a single-motor to drive a single wheel. A single working mode cannot adapt well to driving needs under different working conditions, resulting in poor power performance and economy.

### SUMMARY

In view of the shortcomings of the existing technologies, an objective of the present disclosure is to provide a power system and a vehicle to solve the problem that existing power systems with distributed drive functions can only realize running of a single-motor to drive a single wheel, resulting in a single working mode.

To achieve the above objective, the present disclosure uses the following technical solution.

A power system includes an engine, a power input shaft, a first motor, a differential assembly, a second clutch, and a second motor, the power input shaft being connected to the engine, wherein the first motor is in transmission connection with the power input shaft; the differential assembly includes a first transmission component, a second transmission component, and a first clutch, wherein the first clutch is connected to the first transmission component and the second transmission component respectively, the first clutch is configured to control engagement or disengagement of the first transmission component and the second transmission component, the first transmission component is connected to an external first wheel end, and the second transmission component is connected to an external second wheel end; the second clutch is connected to each the power input shaft and the second transmission component, wherein the second clutch is configured to control power supply and disconnection between the power input shaft and the second transmission component; and the second motor is in transmission connection with the first transmission component.

In some solutions of the present application, the first transmission component includes a differential housing, a differential gear, a first differential reduction driven gear, a first output half shaft, a second output half shaft, and a third clutch, wherein the first differential reduction driven gear is fixedly connected to the differential housing, the second motor is in transmission connection with the first differential reduction driven gear, the differential gear is rotatably connected inside the differential housing, one end of the first output half shaft meshes with the differential gear, and the other end is connected to the first wheel end, one end of the second output half shaft meshes with the differential gear, and the other end is connected to the first clutch; and the third clutch is disposed on the differential housing and engages with one of the first output half shaft and the second output half shaft.

In some solutions of the present application, the first motor is disposed on one circumferential side of the differential assembly, and the second motor is disposed on the other circumferential side of the differential assembly; and an axial direction of the first motor is parallel to an axial direction of the second motor.

In some solutions of the present application, the first motor and the second motor overlap at least partially in the axial directions.

In some solutions of the present application, the second transmission component includes a power output shaft and a second differential reduction driven gear, one end of the power output shaft is connected to the first clutch, and the other end is connected to the second wheel end, and the second differential reduction driven gear is fixedly connected to the power output shaft and is in transmission connection with the second clutch.

In some solutions of the present application, the power system further includes a fourth clutch, wherein the fourth clutch is connected to the power input shaft and the first differential reduction driven gear, and the fourth clutch can control engagement or disengagement of the power input shaft and the first differential reduction driven gear.

In some solutions of the present application, based on that the first transmission component includes the differential housing, the differential gear, the first differential reduction driven gear, the first output half shaft, the second output half shaft, and the third clutch, and the third clutch is disposed on the differential housing and engages with one of the first output half shaft and the second output half shaft, the fourth clutch is connected to the first differential reduction driven gear.

In some solutions of the present application, the second clutch is disposed on the power input shaft, the second clutch and the fourth clutch share a clutch housing, making the second clutch and the fourth clutch constitute a dual clutch, and the clutch housing of the dual clutch is fixedly connected to the power input shaft.

In some solutions of the present application, the power system further includes a fifth clutch connected to the power input shaft and the engine, wherein the fifth clutch is configured to control engagement or disengagement of the engine and the power input shaft.

In some solutions of the present application, the fifth clutch includes a fifth clutch housing and a fifth clutch brake component, wherein the fifth clutch housing is fixedly connected to the power input shaft, and the fifth clutch brake component is movably connected inside the fifth clutch housing and connected to the engine; and the fifth clutch housing is provided with an input shaft gear, an output shaft of the first motor is provided with an eighth gear, and the eighth gear meshes with the input shaft gear.

In some solutions of the present application, the first motor is disposed on the power input shaft.

In some solutions of the present application, the power system further includes a third intermediate shaft, a fifth gear, and a sixth gear, wherein the fifth gear and the sixth gear are each fixed on the third intermediate shaft, the fifth gear is in transmission connection with the second clutch, the sixth gear is in transmission connection with the second transmission component, and a diameter of the sixth gear is smaller than a diameter of the fifth gear.

A power system includes an engine, a power input shaft, a first motor, a differential assembly, a second clutch, a fourth clutch, a sixth clutch, and a second motor, wherein the power input shaft is connected to the engine; the first motor is in transmission connection with the power input shaft; the differential assembly includes a first transmission component, a second transmission component, and a first clutch, wherein the first clutch is connected to the first transmission component and the second transmission component, the first clutch is configured to control engagement or disengagement of the first transmission component and the second transmission component, the second transmission component is connected to an external second wheel end, and the first transmission component is connected to an external first wheel end; the second clutch is connected to the power input shaft and the second transmission component, and configured to control engagement or disengagement of the power input shaft and the second transmission component; the fourth clutch is connected to the power input shaft and the first transmission component, wherein the fourth clutch is configured to control power supply and disconnection between the power input shaft and the first transmission component; the sixth clutch is connected to the first transmission component and the power input shaft, wherein the sixth clutch is configured to control engagement or disengagement of the first transmission component and the power input shaft; and the second motor is connected to the first transmission component.

In some solutions of the present application, the first transmission component includes a differential housing, a differential gear, a first differential reduction driven gear, a first output half shaft, a second output half shaft, and a third clutch, wherein the first differential reduction driven gear is fixedly connected to the differential housing, the second motor and the fourth clutch are each in transmission connection with the first differential reduction driven gear, the differential gear is rotatably connected inside the differential housing, one end of the first output half shaft is connected to the differential gear, and the other end is connected to the first wheel end, one end of the second output half shaft is connected to the differential gear, and the other end is connected to the first clutch; and the third clutch is disposed on the differential housing and engages with one of the first output half shaft and the second output half shaft.

In some solutions of the present application, the second transmission component includes a power output shaft, wherein the power output shaft is connected to the first clutch and the first wheel end; and the second clutch is connected to the power output shaft, the second clutch is provided with a second differential reduction driven gear, and the second differential reduction driven gear is in transmission connection with the power input shaft.

In some solutions of the present application, the power system further includes a second intermediate shaft and a first gear, wherein the second intermediate shaft is connected to the first differential reduction driven gear; the sixth clutch is fixedly connected to the second intermediate shaft, the first gear is fixedly connected to an output end of the sixth clutch, a second gear is rotatably connected to the power input shaft, and a third gear is fixedly connected to the power input shaft, the third gear meshes with the first gear and the second differential reduction driven gear, the second gear is fixedly connected to the fourth clutch and meshes with the first differential reduction driven gear.

In some solutions of the present application, an output shaft of the second motor is provided with a differential reduction input shaft gear; the power system further includes a first intermediate shaft, a differential reduction drive gear, and an intermediate driven gear, wherein the differential reduction drive gear and the intermediate driven gear are each fixed on the first intermediate shaft, the differential reduction drive gear meshes with the first differential reduction driven gear, and the intermediate driven gear meshes with the differential reduction input shaft gear.

In some solutions of the present application, the power system further includes a fifth clutch, connected to the power input shaft and the engine, wherein the fifth clutch is configured to control engagement or disengagement of the engine and the power input shaft.

In some solutions of the present application, the fifth clutch includes a fifth clutch housing and a fifth clutch brake component, wherein the fifth clutch housing is fixedly connected to the power input shaft, and the fifth clutch brake component is movably connected inside the fifth clutch housing and connected to the engine; the fifth clutch housing is provided with an input shaft gear, an output shaft of the first motor is provided with an eighth gear, and the eighth gear meshes with the input shaft gear, and a diameter of the eighth gear is smaller than a diameter of the input shaft gear.

A vehicle includes a vehicle body, a power system, a second wheel end, and a first wheel end, wherein the power system is mounted on the vehicle body and is the power system of any of the above solutions, the second wheel end is connected to the first transmission component of the power system, and the first wheel end is connected to a second transmission component of the power system.

Beneficial effects: according to the power system provided in the present application, the first clutch is disposed between the first transmission component and the second transmission component of the differential assembly, the first transmission component is in transmission connection with the second motor, and the second transmission component is in transmission connection with the first motor through the second clutch. By controlling disengagement of the first clutch and engagement of the second clutch, the second motor can independently control different wheels through the first transmission component respectively, and the first motor can independently control the different wheels through the second transmission component respectively, achieving a distributed working mode. By controlling engagement of the first clutch and disengagement of the second clutch, a working mode of centralized driving of the two wheels by the second motor can be achieved. This allows the power system to achieve multiple working modes, and adapt to driving needs under different working conditions, thereby improving power performance and economy of the power system.

According to the power system provided in the present application, the first clutch is disposed between the first transmission component and the second transmission component of the differential assembly, the first transmission component is in transmission connection with the second motor, and the second transmission component is in transmission connection with the first motor through the second clutch. By controlling disengagement of the first clutch and engagement of the second clutch, the second motor can independently control different wheels through the first transmission component respectively, and the first motor can independently control the different wheels through the second transmission component respectively, achieving a distributed working mode. By controlling engagement of the first clutch and disengagement of the second clutch, a working mode of centralized driving of the two wheels can be achieved. The first motor is further connected to the first transmission component through the sixth clutch and the fourth clutch, respectively. This allow the system to achieve multiple working modes by controlling the second clutch and the fourth clutch under a running mode of centralized driving of the two wheels, and adapt to driving needs under different working conditions, thereby improving power performance and economy of the power system.

A vehicle includes the power system in any of the above solutions. By controlling disengagement of the first clutch and engagement of the second clutch, the first motor can independently control different wheels through the first transmission component respectively, and the second motor can independently control the different wheels through the second transmission component respectively, achieving a distributed working mode. Further, by controlling engagement of the first clutch and disengagement of the second clutch, a running mode of centralized driving of the two wheels can be achieved. This allows the power system to achieve multiple working modes, and adapt to driving needs under different working conditions, thereby improving power performance and economy of the power system.

### BRIEF DESCRIPTION OF THE DRAWINGS

FIG. 1 is a schematic structural diagram 1 of a power system.
FIG. 2 is a schematic structural diagram of a differential assembly of the power system shown in FIG. 1.
FIG. 3 is a schematic structural diagram 2 of a power system.
FIG. 4 is a schematic structural diagram 3 of a power system.
FIG. 5 is a schematic structural diagram 4 of a power system.
FIG. 6 is a schematic structural diagram 5 of a power system.
FIG. 7 is a schematic structural diagram 6 of a power system, wherein a dashed line represents transmission connection between a first differential reduction driven gear and a fourth gear.
FIG. 8 is a schematic structural diagram of a differential assembly of the power system shown in FIG. 7.
FIG. 9 is a diagram of axis system distribution of the power system shown in FIG. 7.

Description of key element symbols:1-engine; 11-power input shaft; 2-second clutch; 21-seventh gear; 3-differential assembly; 31-first transmission component; 311-differential housing; 312-differential gear; 313-first differential reduction driven gear; 314-first output half shaft; 315-second output half shaft; 316-third clutch; 32-second transmission component; 321-power output shaft; 322-second differential reduction driven gear; 33-first clutch; 4-fourth clutch; 41-second gear; 5-fifth clutch; 51-input shaft gear; 6-sixth clutch; 61-first gear; 7-second motor; 71-differential reduction input shaft gear; 8-first motor; 81-eighth gear; 91-first intermediate shaft; 92-differential reduction drive gear; 93-intermediate driven gear; 94-second intermediate shaft; 93-third gear; 96-fourth gear; 97-third intermediate shaft; 98-fifth gear; 99-sixth gear; 210-first wheel end; 220-second wheel end.

### DETAILED DESCRIPTION

The present disclosure provides a power system and a vehicle. To make the objectives, technical solutions and effects of the present disclosure clearer and more explicit, the present disclosure will be further described in detail below with reference to the accompanying drawings and embodiments. It should be understood that the specific embodiments described herein are for illustrative purposes only and are not intended to limit the scope of protection of the present disclosure.

In the description of the present disclosure, it should be understood that the terms "upper", "lower", "inner", "outer", etc., indicate the orientation or positional relationship based on the orientation or positional relationship shown in the accompanying drawings. They are only for the convenience of describing the present disclosure and simplifying the description, and do not indicate or imply that the device or element referred to must have a specific orientation, or be constructed and operated in a specific orientation. Therefore, they should not be construed as limiting the present disclosure.

In the description of the present disclosure, it should be noted that, unless otherwise explicitly specified and limited, the terms "installation", "connected" and "connection" should be interpreted broadly, for example, the connection may be fixed connection, detachable connection, or integral connection; the connection may be mechanical connection, electrical connection, or connection with mutual communication; the connection may be direct connection or indirect connection through an intermediate medium; the connection may be communication within two components or an interaction between two components. Those of ordinary skill in the art can understand the specific meaning of the above terms in the present disclosure according to the specific circumstances.

A vehicle includes a vehicle body, a power system, a second wheel end, and a first wheel end. The power system is mounted on the body. The first wheel end is connected to a first transmission component of the power system, thereby enabling the first wheel end to rotate under drive of the power system. The second wheel end is connected to a second transmission component of the power system, thereby enabling the second wheel end to rotate under drive of the power system.

### Embodiment 1

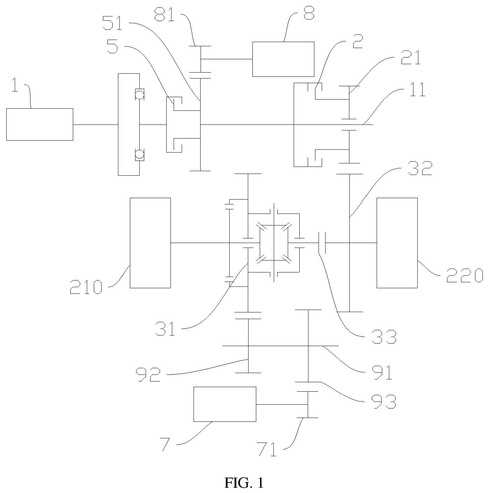

Referring to FIGS. 1-3, a power system includes an engine 1, a power input shaft 11, a first motor 8, a second clutch 2, a differential assembly 3, and a second motor 7. The engine 1 is connected to the power input shaft 11, thereby enabling the engine 1 to drive the power input shaft 11 to rotate. The first motor 8 is connected to the power input shaft 11, such that power on the power input shaft 11 can be transmitted to the first motor 8, and the power of the first motor 8 can also be transmitted to the power input shaft 11. Therefore, the first motor 8 can drive a spindle of the engine 1 to rotate to ignite the engine 1, and the engine 1 may also drive the first motor 8 to generate electricity.

In one embodiment, the power system further includes a fifth clutch 5, which is connected to the power input shaft 11 and the engine 1. The fifth clutch 5 is configured to control engagement or disengagement of the engine 1 and the power input shaft 11. When the fifth clutch 5 is in an engaged state, the power of the engine 1 can be transmitted to the power input shaft 11. When the first motor 8 is configured to drive a vehicle to move, the fifth clutch 5 is in a disengaged state, such that the first motor 8 does not need to drag an output shaft of the engine 1 to rotate, thereby reducing power utilization efficiency of the first motor 8.

In an embodiment shown in FIG. 1, the fifth clutch 5 includes a fifth clutch housing and a fifth clutch brake component. The fifth clutch housing is fixedly connected to the power input shaft 11, and the fifth clutch brake component is movably connected inside the fifth clutch housing and connected to the output shaft of the engine 1. By controlling engagement of the fifth clutch housing and the fifth clutch brake component, the output shaft of the engine 1 is connected to the power input shaft 11.

The differential assembly 3 includes a first transmission component 31, a second transmission component 32, and a first clutch 33. The first transmission component 31 is connected to a first wheel end 210, and the second motor 7 is in transmission connection with the first transmission component 31, such that the second motor 7 can drive the first wheel end 210 to rotate. The second transmission component 32 is connected to the second wheel end 220, and the second clutch 2 is connected to the power input shaft 11 and the second transmission component 32. The second clutch 2 is configured to control power supply and disconnection between the power input shaft 11 and the second transmission component 32. In an embodiment shown in FIG. 1, the second clutch 2 is disposed on the power input shaft 11 and is connected to the second transmission component 32. When the second clutch 2 is in an engaged state, the first motor 8 can drive the second wheel end 220 to rotate.

The first clutch 33 is connected to the first transmission component 31 and the second transmission component 32 respectively. When the first clutch 33 is in a disengaged state and the second clutch 2 is in an engaged state, the first wheel end 210 can be driven by the second motor 7 and the second wheel end 220 can be driven by the first motor 8, such that the first wheel end 210 and the second wheel end 220 form a distributed working mode with independent power sources. Further, by controlling speeds of the first motor 8 and the second motor 7, a turning radius of the vehicle can be reduced. When the vehicle encounters extreme accidents such as tire blowout or slippery road surface, vehicle balance can also be controlled by controlling the speeds of the first motor 8 and the second motor 7, thereby improving safety of vehicle driving. When the first clutch 33 is in an engaged state, the power of the second motor 7 can simultaneously drive the first wheel end 210 and the second wheel end 220 to rotate, thereby improving the power performance of the vehicle.

When the first clutch 33 is in an engaged state, the power system may also achieve a single-motor drive mode, a hybrid parallel mode and an engine direct drive mode.

When the power system is in the single-motor drive mode, the first motor 8 and engine 1 do not work, the second motor 7 works, the fifth clutch 5 and the second clutch 2 are in a disengaged state, and the first clutch 33 is in a engaged state, such that the power of the second motor 7 is transmitted to the first wheel end and the second wheel end through the differential assembly 3, thereby enabling the second motor 7 to drive the vehicle to move. In the working mode, the fifth clutch 5 can also be in an engaged state, without affecting the second motor 7 driving the first wheel end and the second wheel end to rotate.

When the power system is in the hybrid parallel mode, the fifth clutch 5, the second clutch 2 and the first clutch 33 are all in an engaged state, the engine 1 and the second motor 7 work, the power of the engine 1 is combined with the power of the second motor 7 at the differential assembly 3 after passing through the fifth clutch 5, the power input shaft 11 and the second clutch 2. By the differential assembly 3, the power jointly drives the first wheel end and the second wheel end to rotate. In the working mode, the first motor 8 may not work, or it may generate electricity or output power.

When the power system is in the engine direct drive mode, the fifth clutch 5, the second clutch 2 and the first clutch 33 are all in an engaged state, the engine 1 works, the first motor 8 and the second motor 7 do not work, such that the power of the engine 1 drives the first wheel end and the second wheel end to rotate after passing through the fifth clutch 5, the power input shaft 11, the second clutch 2 and the differential assembly 3.

In the above, the power system controls the fifth clutch 5, the second clutch 2 and the first clutch 33 to achieve multiple working modes such as the distributed working mode, single-motor drive mode, hybrid parallel mode and engine direct drive mode, so as to adapt well to driving needs under different working conditions and improve power performance and economy of the vehicle.

In other embodiments, the power system may not be provided with the fifth clutch 5, that is, the engine 1 is directly connected to the power input shaft 11. When the power system is in a distributed working mode, the first motor 8 drives the second wheel to rotate while dragging the engine 1 to idle.

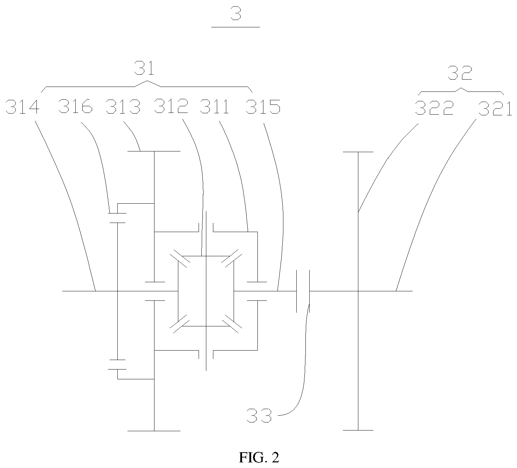

Referring to FIG. 2, in detail, the first transmission component 31 includes a differential housing 311, a differential gear 312, a first differential reduction driven gear 313, a first output half shaft 314, and a second output half shaft 315. The first differential reduction driven gear 313 is fixedly connected to the differential housing 311. The second motor 7 is in transmission connection with the first differential reduction driven gear 313. The differential gear 312 is rotatably connected inside the differential housing 311. One end of the first output half shaft 314 meshes with the differential gear 312, and the other end is connected to the first wheel end 210. One end of the second output half shaft 315 meshes with the differential gear 312, and the other end is connected to the first clutch 33. When the first clutch 33 is in an engaged state and the power of the second motor 7 is input from the first differential reduction driven gear 313, the power of the second motor 7 is transmitted to the first output half shaft 314 and the second output half shaft 315 through the differential gear 312. Since the differential gear 312 can rotate relative to the differential housing 311, a speed difference is formed between the first output half shaft 314 and the second output half shaft 315, thereby enabling the vehicle to turn. Of course, the first output half shaft 314 and the second output half shaft 315 can also rotate at the same speed to achieve straight-line driving of the vehicle.

In other embodiments, the first transmission component 31 includes the first output half shaft 314 and the first differential reduction driven gear 313. The first differential reduction driven gear 313 is fixed on the first output half shaft 314, and the first output half shaft 314 is connected to the first clutch 33 and the first wheel end.

Referring to FIG. 1 and FIGS. 3-6, the first transmission component 31 further includes a third clutch 316. The third clutch 316 is fixedly connected to the differential housing 311 and connected to one of the first output half shaft 314 and the second output half shaft 315. When the third clutch 316 is connected to the first output half shaft 314, the third clutch 316 is configured to control engagement or disengagement between the differential housing 311 and the first output half shaft 314. When the third clutch 316 is connected to the second output half shaft 315, the third clutch 316 is configured to control engagement or disengagement between the differential housing 311 and the second output half shaft 315.

Referring to FIGS. 1-2 and FIGS. 4-5, when the third clutch 316 is configured to control engagement or disengagement between the differential housing 311 and the first output half shaft 314, and when the third clutch 316 is in an engaged state, the first output half shaft 314 is locked together with the differential housing 311. Therefore, the first output half shaft 314 cannot rotate relative to the differential housing 311, which also prevents the differential gear 312 from rotating (i.e., rotation on its own axis, which means rotation around the axis of the differential gear 312). Therefore, the differential action cannot be achieved, and the power input from the first differential reduction driven gear 313 is directly transmitted to the first output half shaft 314 through the third clutch 316.

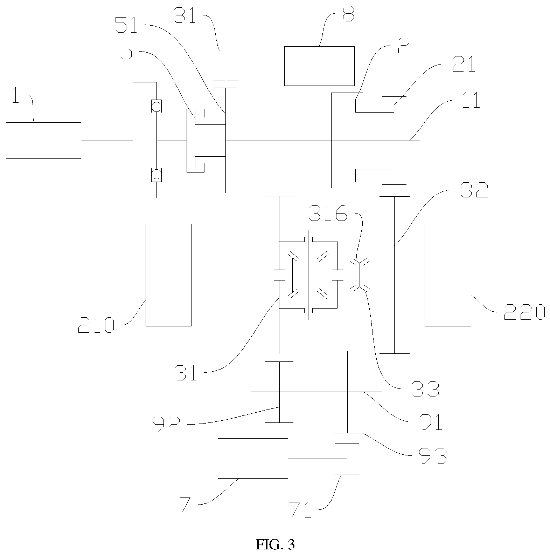

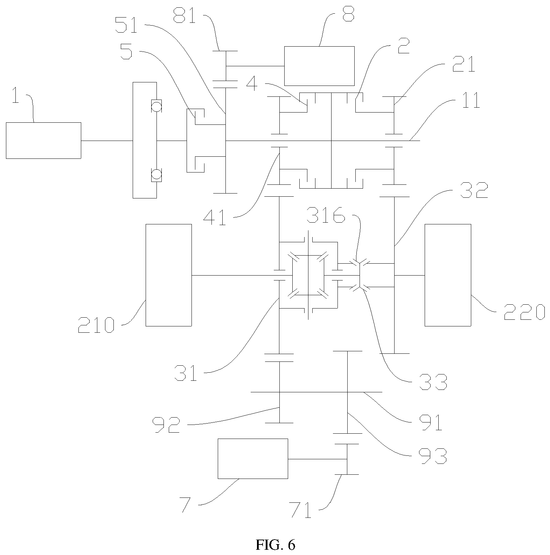

Referring to FIG. 3 and FIG. 6, when the third clutch 316 is configured to control engagement or disengagement between the differential housing 311 and the second output half shaft 315, and when the third clutch 316 is in an engaged state, the second output half shaft 315 is locked together with the differential housing 311. Therefore, the second output half shaft 315 cannot rotate relative to the differential housing 311, and the differential gear 312 cannot rotate (i.e., rotation on its own axis). Therefore, the differential housing 311, the differential gear 312, the first differential reduction driven gear 313, the first output half shaft 314, and the second output half shaft 315 are fixed integrally, and differential action cannot be achieved. This allows the power input from the first differential reduction driven gear 313 to be directly transmitted to the first output half shaft 314 through the third clutch 316, the second output half shaft 315, and the differential gear 312.

In the above, when the second clutch 2 and the third clutch 316 are in an engaged state and the first clutch 33 is in a disengaged state, the first wheel end 210 is driven by the second motor 7 and the second wheel end 220 is driven by the first motor 8. Therefore, the first wheel end 210 and the second wheel end 220 constitute a distributed structure. With the first clutch 33 in an engaged state and the third clutch 316 in a disengaged state, the power input from the second motor 7 is transmitted to the differential gear 312 through the first differential reduction driven gear 313. Part of the power is then transmitted to the first wheel end 210 through the first output half shaft 314, and the other part is transmitted to the second wheel end 220 through the second output half shaft 315, the first clutch 33, and the second transmission component 32, thus enabling the first wheel end 210 and the second wheel end 220 to be driven by the same power source. When the first clutch 33 is in an engaged state and the second clutch 2 and the third clutch 316 are in a disengaged state, the first wheel end 210 and the second wheel end 220 can be driven by the second motor 7 to achieve single-motor drive functions. When the fifth clutch 5, the second clutch 2, and the first clutch 33 are in an engaged state, and the third clutch 316 is in a disengaged state, the power system can achieve the hybrid parallel mode and engine direct drive mode. When the second clutch 2 and the first clutch 33 are in an engaged state, and the fifth clutch 5 and the third clutch 316 are in a disengaged state, the power system can also achieve a dual-motor drive mode. When the power system is in the dual-motor drive mode, the first motor 8 and the second motor 7 work. The power of the first motor 8 is combined with the power of the second motor 7 at the differential assembly 3 after passing the power input shaft 11 and the second clutch 2, and jointly drives the first wheel end and the second wheel end to rotate.

The second transmission component 32 includes a power output shaft 321 and a second differential reduction driven gear 322. One end of the power output shaft 321 is connected to the first clutch 33, and the other end is connected to the second wheel end 220. The second differential reduction driven gear 322 is fixedly connected to the power output shaft 321 and is in transmission connection with the second clutch 2, such that the power passing through the second clutch 2 can be transmitted to the second wheel end 220 through the second differential reduction driven gear 322 and the power output shaft 321, and can also be transmitted to the first wheel end 210 through the second differential reduction driven gear 322, the power output shaft 321, the first clutch 33 and the first transmission component 31.

Specifically, an output end of the second clutch 2 is provided with a first gear 61, which is rotatably connected to the power input shaft 11. The first gear 61 meshes with the second differential reduction driven gear 322 to achieve connection between the second transmission component 32 and the second clutch 2.

An output shaft of the second motor 7 is provided with a differential reduction input shaft gear 71. The power system further includes a first intermediate shaft 91, a differential reduction drive gear 92, and an intermediate driven gear 93. The differential reduction drive gear 92 and the intermediate driven gear 93 are each fixed on the first intermediate shaft 91. The differential reduction drive gear 92 meshes with the first differential reduction driven gear 313, and the intermediate driven gear 93 meshes with the differential reduction input shaft gear 71, thereby achieving the transmission connection between the second motor 7 and the first transmission component 31 (the first differential reduction driven gear 313).

The diameter of the differential reduction input shaft gear 71 is smaller than the diameter of the differential reduction drive gear 92, such that when the power of the second motor 7 is transmitted to the first transmission component 31, the differential reduction input shaft gear 71, the intermediate driven gear 93 and the differential reduction drive gear 92 form a speed reduction structure to achieve speed reduction and torque increase.

In other embodiments, the differential reduction input shaft gear 71 may also directly mesh with the first differential reduction driven gear 313.

In one embodiment, the second motor 7 is disposed on one circumferential side of the differential assembly 3, and the first motor 8 is disposed on the outer circumferential side of the differential assembly 3. In the differential assembly 3, the first output shaft half shaft 314, the second output half shaft 315, the power output shaft 321, the first differential reduction driven gear 313, and the differential housing 311 are coaxially arranged. The circumferential direction of the differential assembly 3 refers to the outer side of the axis where the first output shaft half shaft 314, the second output half shaft 315, the first differential reduction driven gear 313, and the differential housing 311 are located. The power input shaft 11, the first intermediate shaft 91, the first motor 8, and the second motor 7 are all arranged parallel to the differential assembly 3. Moreover, the differential assembly 3, the power input shaft 11, the first intermediate shaft 91, the first motor 8, and the second motor 7 are at least partially overlapped in the axial direction, thereby shortening the length of the power system in the Y direction (the axial direction of the power input shaft 11, which is also the width direction of the vehicle).

In an embodiment shown in FIG. 1, the first output shaft half shaft 314, the second output half shaft 315, and the power output shaft 321 are on the same straight line. The end of the first output shaft half shaft 314 away from the second output half shaft 315 is a first end of the differential assembly 3, and the end of the power output shaft 321 away from the second output half shaft 315 is a second end of the differential assembly 3. The power input shaft 321, the first intermediate shaft 91, the first motor 8, and the second motor 7 are all located between the first end of the differential assembly 3 and the second end of the differential assembly 3, which shortens the length of the power system in the Y direction (the axial direction of the power input shaft 11).

The first motor 8 is located on the outer side of the second clutch 2, meaning that the first motor 8 coincides with the power input shaft 11 in the axial direction. The intermediate driven gear 93 is located on the outer side of the differential reduction drive gear 92 near the second differential reduction driven gear 322. The second motor 7 is located on the outer side of the first differential reduction driven gear 313, such that the first intermediate shaft 91 and the second motor 7 coincide with the power input shaft 11 in the axial direction. Therefore, the first motor 8 and the second motor 7 at least partially coincide in the axial direction, making the structure of the power system more compact in the Y direction.

In one embodiment, the fifth clutch 5 is provided with an input shaft gear 51, and the output shaft of the first motor 8 is provided with an eighth gear 81. The eighth gear 81 meshes with the input shaft gear 51 to achieve the transmission connection between the first motor 8 and the power input shaft 11. Further, the input shaft gear 51 is disposed on the fifth clutch 5, which reduces space on the power input shaft 11 for mounting the input shaft gear 51, thereby reducing the length of the power input shaft 11 in the axial direction. The diameter of the eighth gear 81 is smaller than that of the input shaft gear 51, such that when the first motor 8 outputs power, the eighth gear 81 and the input shaft gear 51 form a speed reduction structure, thereby achieving speed reduction and torque increase of the first motor 8. When the engine 1 drives the first motor 8 to generate electricity, it achieves speed increase and torque reduction, that is, reducing the torque demand of the first motor 8, thereby reducing the size of the first motor 8 and increasing the power density of the entire power system.

In some embodiments shown in FIG. 1 and FIG. 3, when the first clutch 33 is in an engaged state, the first wheel end 210 and the second wheel end 220 are driven by the second motor 7, and the engine 1 can drive the first motor 8 to generate electricity, forming a range-extended power system, thereby improving a vehicle range. The first clutch 33 is in a disengaged state. The first wheel end 210 is driven by the second motor 7, and the second wheel end 220 is driven by the first motor 8, forming a distributed structure. By controlling the speed of the second motor 7 and the first motor 8 respectively, the vehicle can drive and turn, giving the vehicle a smaller turning radius or road track following accuracy. At the same time, it can respond faster to emergencies and improve the safety of the vehicle driving. Therefore, a power system that integrates a range-extended module and the distributed electric drive into a single housing is realized, achieving a high degree of integration of the power system.

### Embodiment 2

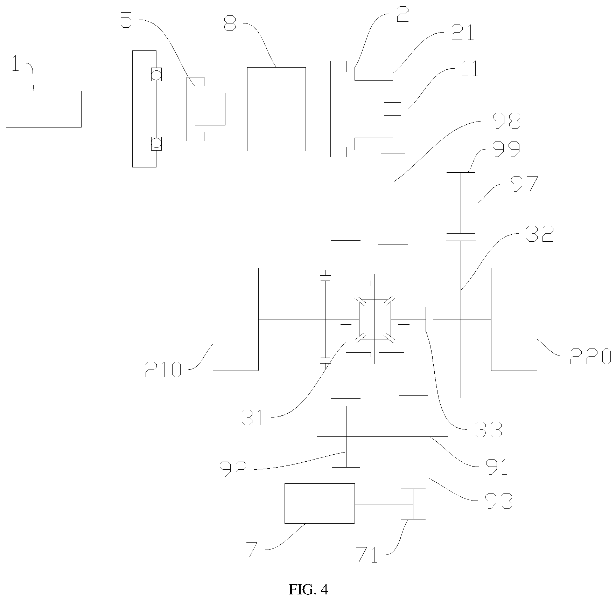

Referring to FIG. 4, this embodiment is based on Embodiment 1, that is, based on the range-extended power system shown in FIG. 1 and FIG. 3, the position of the first motor 8 is adjusted, that is, the output shaft of the first motor 8 is directly fixedly connected to the power input shaft 11. This reduces the gear transmission structure between the engine 1 and the first motor 8, thereby reducing the power transmission efficiency loss between the engine 1 and the first motor 8. This improves the power generation efficiency of the first motor 8 when the engine 1 drives the first motor 8 to generate electricity.

In an embodiment shown in FIG. 4, the output shaft of the first motor 8 is sleeved on the power input shaft 11, and the output shaft of the first motor 8 is fixedly connected to the power input shaft 11, making the structure of the power system more compact.

In some embodiments, the power system further includes a third intermediate shaft 97, a fifth gear 98, and a sixth gear 99. The third intermediate shaft 97 is arranged parallel to the power input shaft 11. The fifth gear 98 and the sixth gear 99 are each fixed on the third intermediate shaft 97. The fifth gear 98 is in transmission connection with the second clutch 2, and the sixth gear 99 is in transmission connection with the second transmission component 32. The arrangement of the third intermediate shaft 97, the fifth gear 98 and the sixth gear 99 provides large space between the differential assembly 3 and the power input shaft 11 for mounting the first motor 8.

The diameter of the sixth gear 99 is smaller than that of the fifth gear 98, such that when the sixth gear 99 is in transmission with the second differential reduction driven gear 322 in the second transmission component 32, the diameter of the second differential reduction driven gear 322 is reduced while having a same transmission ratio.

### Embodiment 3

This embodiment is based on Embodiment 1, that is, based on the range-extended power system shown in FIG. 1 and FIG. 3, a fourth clutch 4 is additionally disposed. When the first clutch 33 is in an engaged state, the first wheel end 210 and the second wheel end 220 can be driven by one or more of the first motor 8, the second motor 7 and the engine 1 to form a power system, thereby improving the vehicle's power output, maximizing the utilization of the entire power system to achieve escape, and also improving the overall vehicle handling performance. Therefore, a power system that integrates the hybrid module, range-extended module and distributed electric drive into a single housing is realized, achieving a high degree of integration of the power system.

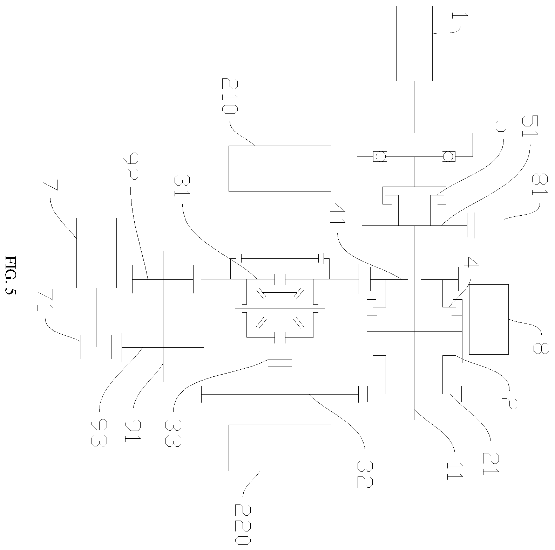

Referring to FIG. 5 and FIG. 6, the power system includes the above engine 1, power input shaft 11, fifth clutch 5, first motor 8, second clutch 2, differential assembly 3, and second motor 7. The power system further includes a fourth clutch 4, which is connected to the power input shaft 11 and the first differential reduction driven gear 313. The fourth clutch 4 is configured to control engagement or disengagement of the power input shaft 11 and the first differential reduction driven gear 313, such that the power passing through the power input shaft 11 can be transmitted to the first transmission component 31 through the fourth clutch 4. When the first clutch 33 and the fourth clutch 4 are in an engaged state, the first motor 8 or the engine 1 can drive the first wheel end 210 and the second wheel end 220 to rotate. Alternatively, the first motor 8 and the second motor 7 can simultaneously drive the first wheel end 210 and the second wheel end 220 to rotate, or the engine 1 and the second motor 7 can simultaneously drive the first wheel end 210 and the second wheel end 220 to rotate. In some embodiments shown in FIG. 5 and FIG. 6, the fourth clutch 4 is disposed on the power input shaft 11 and is connected to the first differential reduction driven gear 313.

In one embodiment, the second clutch 2 and the fourth clutch 4 share a clutch housing, making the second clutch 2 and the fourth clutch 4 constitute a dual clutch. The clutch housing of the dual clutch is fixedly connected to the power input shaft 11, thereby reducing space occupied by the second clutch 2 and the fourth clutch 4, that is, reducing the length of the power input shaft 11, and thus reducing the axial length of the power system along the power input shaft 11.

In some embodiments shown in FIG. 5 and FIG. 6, the second clutch 2 and the fourth clutch 4 constitute the back-to-back dual clutch, which makes the structure more compact and facilitates arrangement of the second differential reduction driven gear 322 connected to the second clutch 2 and the first differential reduction driven gear 313 connected to the fourth clutch 4 in the axial direction of the power input shaft.

The output end of the fourth clutch 4 is provided with a second gear 41, which is rotatably connected to the power input shaft 11. The second gear 41 meshes with the first differential reduction driven gear 313 to achieve connection between the first transmission component 31 and the fourth clutch 4.

In one embodiment, the differential reduction drive gear 92, the first differential reduction driven gear 313 and the fourth clutch 4 are arranged on the same plane, the second motor 7 is arranged on the radial outer side of the differential reduction drive gear 92, the first motor 8 is arranged on the radial outer side of the second clutch 2, and the first motor 8 and the second motor 7 are arranged in parallel. The distance between the first motor 8 and the second motor 7 in the Y direction is reduced, which shortens the length of the power system in the Y direction (axial direction of the power input shaft 11) and makes full use of the length in the X direction. The Y direction represents the width of the vehicle, and the X direction represents the length of the vehicle.

In the above, the working modes of the power system include a single-motor pure electric drive mode, a dual-motor pure electric drive mode, dual-motor distributed pure electric drive mode, a parking generation mode, a series mode, a hybrid parallel mode, an engine direct drive mode, a single-motor energy recovery mode, a dual-motor distributed energy recovery mode, a single-motor pure electric escape mode, a dual-motor pure electric escape mode (gear 1), and dual-motor pure electric escape mode (gear 2).

When the power system is in the single-motor pure electric drive mode, the first clutch 33 is in an engaged state, the second motor 7 works, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321.

When the power system is in the dual-motor pure electric drive mode, the fourth clutch 4 and the first clutch 33 are in an engaged state, the first motor 8 and the second motor 7 work, the power of the first motor 8 is transmitted to the first output half shaft 314 and the second output half shaft 315 through the power input shaft 11, the fourth clutch 4, the first differential reduction driven gear 313, and the differential gear 312, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321, thereby enabling the first motor 8 and the second motor 7 to jointly drive the first wheel end 210 and the second wheel end 220 to rotate.

When the power system is in the dual-motor distributed pure electric drive mode, the second clutch 2 and the third clutch 316 are in an engaged state, the first motor 8 and the second motor 7 work, the power of the first motor 8 is transmitted to the second wheel end 220 through the power input shaft 11, the second clutch 2, the second differential reduction driven gear 322 and the power output shaft 321, and the power of the second motor 7 is transmitted to the first wheel end 210 through the first differential reduction driven gear 313, the third clutch 316 and the first output half shaft 314.

When the power system is in the parking generation mode, the fifth clutch 5 is in an engaged state, and the engine 1 drives the first motor 8 to generate electricity through the fifth clutch 5 and the power input shaft 11.

When the power system is in the series mode, the fifth clutch 5 and the first clutch 33 are in an engaged state, the engine 1 drives the first motor 8 to generate electricity through the fifth clutch 5 and the power input shaft 11, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321.

When the power system is in the hybrid parallel mode, the fifth clutch 5, the fourth clutch 4, and the first clutch 33 are in an engaged state, the engine 1 and the second motor 7 work, the power of the engine 1 is transmitted to the first output half shaft 314 and the second output half shaft 315 through the fifth clutch 5, the power input shaft 11, the fourth clutch 4, the first differential reduction driven gear 313, and the differential gear 312, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321, thereby enabling the engine 1 and the second motor 7 to jointly drive the first wheel end 210 and the second wheel end 220 to rotate. In this mode, the first motor 8 may be in a power generation state or in a driving state.

When the power system is in the engine direct drive mode, the fifth clutch 5, the fourth clutch 4 and the first clutch 33 are in an engaged state, the engine 1 works, the power of the engine 1 is transmitted to the first output half shaft 314 and the second output half shaft 315 through the fifth clutch 5, the power input shaft 11, the fourth clutch 4, the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321, thereby enabling the engine 1 to drive the first wheel end 210 and the second wheel end 220 to rotate.

When the power system is in the single-motor energy recovery mode, the first clutch 33 is in an engaged mode, and the first wheel end 210 and the second wheel end 220 drive the second motor 7 to generate electricity.

When the power system is in the dual-motor distributed energy recovery mode, the second clutch 2 and the third clutch 316 are in an engaged state, the second wheel end 220 drives the first motor 8 to generate electricity through the power output shaft 321, the second differential reduction driven gear 322, the second clutch 2, and the power input shaft 11, and the first wheel end 210 drives the second motor 7 to generate electricity through the first output half shaft 314, the third clutch 316, and the first differential reduction driven gear 313.

When the power system is in single-motor pure electric escape mode, the first clutch 33 and the third clutch 316 are in an engaged state, the second motor 7 works, and the power of the second motor 7 is transmitted to the first output half shaft 314 and the second output half shaft 315 through the first differential reduction driven gear 313, the third clutch 316 and the differential housing 311. The first output half shaft 314 drives the first wheel end 210 to rotate, and the second output half shaft 315 drives the second wheel end 220 to rotate through the first clutch 33 and the power output shaft 321.

When the power system is in the dual-motor pure electric escape mode (gear 1), the first clutch 33, the third clutch 316, and the fourth clutch 4 are in an engaged state, the first motor 8 and the second motor 7 work, the power of the first motor 8 is transmitted to the first output half shaft 314 and the second output half shaft 315 through the power input shaft 11, the fourth clutch 4, the first differential reduction driven gear 313, the third clutch 316, and the differential housing 311, the power of the second motor 7 is transmitted to the first output half shaft 314 and the second output half shaft 315 through the first differential reduction driven gear 313, the third clutch 316, and the differential housing 311, the first output half shaft 314 drives the first wheel end 210 to rotate, and the second output half shaft 315 drives the second wheel end 220 to rotate through the first clutch 33 and the power output shaft 321.

When the power system is in the dual-motor pure electric escape mode (gear 2), the second clutch 2, the first clutch 33, and the third clutch 316 are in an engaged state, the first motor 8 and the second motor 7 work, the power of the first motor 8 is transmitted to the power output shaft 321 through the power input shaft 11, the second clutch 2, and the second differential reduction driven gear 322, the power of the second motor 7 is transmitted to the first output half shaft 314 through the first differential reduction driven gear 313 and the third clutch 316. Since the first output half shaft 314, the differential housing 311, the differential gear 312, and the second output half shaft 315 are locked together, the first clutch 33 is connected to second output half shaft 315 and the power output shaft 321, thereby enabling the first motor 8 and the second motor 7 to jointly drive the first wheel end 210 and the second wheel end 220 to rotate.

Specific working modes of the power system are shown in the table below:

| No. | Working mode | Engine | First motor | Second motor | Fifth clutch | Second clutch | First clutch | Third clutch | Fourth clutch |
|---|---|---|---|---|---|---|---|---|---|
| 1 | Single-motor pure electric drive mode | | | Drive | / | Disengaged | Engaged | Disengaged | Disengaged |
| 2 | Dual-motor pure electric drive mode | | Drive | Drive | Disengaged | Disengaged | Engaged | Disengaged | Engaged |
| 3 | Dual-motor distributed pure electric drive mode | | Drive | Drive | Disengaged | Engaged | Disengaged | Engaged | Disengaged |
| 4 | Parking generation mode | Working | Power generation | | Engaged | Disengaged | / | / | Disengaged |
| 5 | Series mode | Working | Power generation | Drive | Engaged | Disengaged | Engaged | Disengaged | Disengaged |
| 6 | Hybrid parallel mode | Working | | Drive | Engaged | Disengaged | Engaged | Disengaged | Engaged |
| 7 | Engine direct drive mode | Working | | | Engaged | Disengaged | Engaged | Disengaged | Engaged |
| 8 | Single-motor energy recovery mode | | | Power generation | / | Disengaged | Engaged | Disengaged | Disengaged |
| 9 | Dual-motor distributed energy recovery mode | | Power generation | Power generation | Disengaged | Engaged | Disengaged | Engaged | Disengaged |
| 10 | Single-motor pure electric escape mode | | | Drive | Disengaged | Disengaged | Engaged | Engaged | Disengaged |
| 11 | Dual-motor pure electric escape mode (gear 1) | | Drive | Drive | Disengaged | Disengaged | Engaged | Engaged | Engaged |
| 12 | Dual-motor pure electric escape mode (gear 2) | | Drive | Drive | Disengaged | Engaged | Engaged | Engaged | Disengaged |

In the table above, "/" indicates that the corresponding clutch may be in an engaged or disengaged state, but in the present application, the disengaged state is preferred.

### Embodiment 4

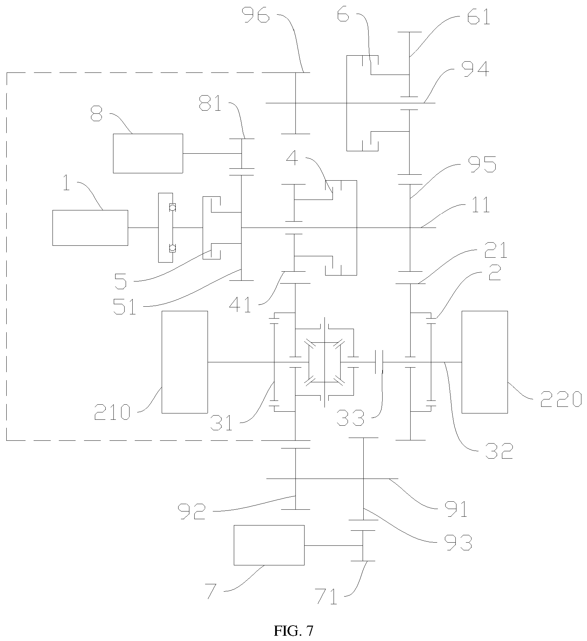

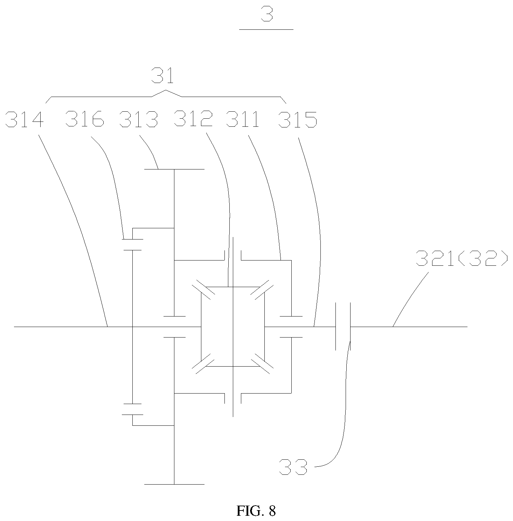

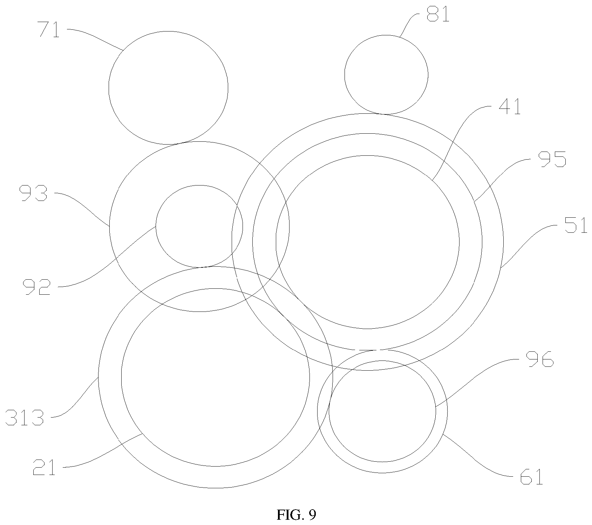

Referring to FIGS. 7-9, this embodiment is based on Embodiment 3, that is, based on the power system shown in FIG. 5 and FIG. 6, a sixth clutch 6 is additionally disposed. The sixth clutch 6 is connected to first transmission component 31 and the power input shaft 11, such that the fourth clutch 4 and the sixth clutch 6 form two gears of the power system, forming a 2-gear power system. The 2-gear power system not only enables a wheel escape mode, maximizing the overall power efficiency for escaping, but also features dual-motor drive, improving the vehicle handling performance. Therefore, a power system that integrates a hybrid module, a range-extended module, and distributed electric drive into a single housing is realized, achieving a high degree of integration of the power system. The power system has multiple gears, which further optimizes the working efficiency of the engine and the first motor, and also helps to improve the vehicle acceleration capability.

Specifically, the power system includes an engine 1, a power input shaft 11, a fifth clutch 5, a first motor 8, a second clutch 2, a fourth clutch 4, a sixth clutch 6, a differential assembly 3, and a second motor 7. The fifth clutch 5 is connected to the power input shaft 11 and the engine 1. The fifth clutch 5 is configured to control engagement or disengagement of the engine 1 and the power input shaft 11. When the fifth clutch 5 is in an engaged state, the power of the engine 1 can be transmitted to the power input shaft 11. The first motor 8 is in transmission connection with the power input shaft 11, such that the power on the power input shaft 11 can be transmitted to the first motor 8, and the power on the first motor 8 can also be transmitted to the power input shaft 11. Therefore, when the fifth clutch 5 is in an engaged state, the first motor 8 can drive a spindle of the engine 1 to rotate to ignite the engine 1, and the engine 1 can also drive the first motor 8 to generate electricity.

In an embodiment shown in FIG. 7, the fifth clutch 5 includes a fifth clutch housing and a fifth clutch brake component. The fifth clutch housing is fixedly connected to the power input shaft 11, and the fifth clutch brake component is movably connected inside the fifth clutch housing and connected to an output shaft of the engine 1. By controlling engagement of the fifth clutch housing and the fifth clutch brake component, the output shaft of the engine 1 is connected to the power input shaft 11.

The differential assembly 3 includes a first transmission component 31, a second transmission component 32, and a first clutch 33. The first transmission component 31 is connected to an external first wheel end 210 and a second motor 7, such that the second motor 7 can drive the first wheel end 210 to rotate through the first transmission component 31. The second transmission component 32 is connected to a second wheel end 220. The first clutch 33 is connected to the first transmission component 31 and the second transmission component 32 respectively, and the first clutch 33 is configured to control engagement or disengagement of the first transmission component 31 and the second transmission component 32. When the first clutch 33 is in an engaged state, the power of the second motor 7 can simultaneously drive the first wheel end 210 and the second wheel end 220 to rotate, thereby improving the power performance of the vehicle. When the first clutch 33 is in a disengaged state, the first wheel end 210 can be driven by the second motor 7, and the second wheel end 220 can be driven by the first motor 8, such that the first wheel end 210 and the second wheel end 220 form a distributed structure with independent power sources. Further, by controlling speeds of the first motor 8 and the second motor 7, a turning radius of the vehicle can be reduced. In the event of extreme accidents such as tire blowouts or slippery road surfaces, vehicle balance can also be controlled by controlling the speeds of the first motor 8 and the second motor 7, thereby improving safety of vehicle driving.

The fourth clutch 4 is connected to the power input shaft 11 and the first transmission component 31. When the fourth clutch 4 is in an engaged state, the first motor 8 can also drive the first wheel end 210 to rotate through the fourth clutch 4 and the first transmission component 31. In an embodiment shown in FIG. 7, the fourth clutch 4 is disposed on the power input shaft 11 and connected to the first transmission component 31.

In detail, the power system further includes a second intermediate shaft 94, which is arranged parallel to the power input shaft 11 and is connected to the first transmission component 31. The sixth clutch 6 is connected to second intermediate shaft 94 and the power input shaft 11 and is configured to control engagement and disengagement of the second intermediate shaft 94 and the power input shaft 11. In an embodiment shown in FIG. 7, the sixth clutch 6 is disposed on the second intermediate shaft 94 and connected to the power input shaft 11.

The second transmission component 32 is connected to the power input shaft 11 through the second clutch 2, and the second wheel end 220 is connected to the second transmission component 32, such that the first motor 8 can drive the second wheel end 220 to rotate through the power input shaft 11 and the second transmission component 32.

The second clutch 2 is connected to the power input shaft 11 and the second transmission component 32. The second clutch 2 is configured to control engagement or disengagement of the power input shaft 11 and the second transmission component 32. When the first clutch 33 and the fourth clutch 4 are in an engaged state and the second clutch 2 is in a disengaged state, the first motor 8, the second motor 7 and the engine 1 can input power from the first differential reduction driven gear 313 to simultaneously drive the first wheel end 210 and the second wheel end 220 to rotate.

The second transmission component 32 includes a power output shaft 321, which is connected to the first clutch 33 and the second wheel end 220. The second clutch 2 is connected to the power output shaft 321 and is provided with a seventh gear 21. The seventh gear 21 is rotatably connected to the power output shaft 321. The second clutch 2 is in transmission connection with the power input shaft 11 through the seventh gear 21, thereby achieving the control of power supply and disconnection between the power input shaft 11 and the power output shaft 321 by the second clutch 2.

The first transmission component 31 includes a differential housing 311, a differential gear 312, a first differential reduction driven gear 313, a first output half shaft 314, and a second output half shaft 315. The first differential reduction driven gear 313 is fixedly connected to the differential housing 311. The second motor 7, the second intermediate shaft 94, and the fourth clutch 4 are all in transmission connection with the first differential reduction driven gear 313. The differential gear 312 is rotatably connected inside the differential housing 311. One end of the first output half shaft 314 is connected to the differential gear 312, and the other end is connected to the first wheel end 210. One end of the second output half shaft 315 is connected to the differential gear 312, and the other end is connected to the first clutch 33.

When the fourth clutch 4 is in an engaged state and the second clutch 2 is in a disengaged state, the first motor 8, the second motor 7, and the engine 1 can all drive the first output half shaft 314 and the second output half shaft 315 to rotate. When the first clutch 33 is in an engaged state, the power of the second output half shaft 315 can be transmitted to the second wheel end 220 through the first clutch 33 and the power output shaft 321, such that one or more of the first motor 8, the second motor 7, and the engine 1 can simultaneously drive the first wheel end 210 and the second wheel end 220 to rotate. In this state, the differential gear 312 can rotate relative to the differential housing 311, such that a speed difference is formed between the first output half shaft 314 and the second output half shaft 315, thereby enabling the vehicle to turn. Of course, the first output half shaft 314 and the second output half shaft 315 can also rotate at the same speed to achieve straight-line driving of the vehicle.

The first transmission component 31 further includes a third clutch 316, which is disposed on the differential housing 311 and can be engaged with one of the first output half shaft 314 and the second output half shaft 315. When the third clutch 316 is connected to the first output half shaft 314, the third clutch 316 is configured to control engagement or disengagement between the differential housing 311 and the first output half shaft 314. When the third clutch 316 is connected to the second output half shaft 315, the third clutch 316 is configured to control engagement or disengagement between the differential housing 311 and the second output half shaft 315.

When the third clutch 316 is configured to control engagement or disengagement between the differential housing 311 and the first output half shaft 314, and when the third clutch 316 is in an engaged state, the first output half shaft 314 is locked together with the differential housing 311. Therefore, the first output half shaft 314 cannot rotate relative to the differential housing 311, which also prevents the differential gear 312 from rotating (i.e., rotation on its own axis, which means rotation around the axis of the differential gear 312). Therefore, the differential action cannot be achieved, and the power input from the first differential reduction driven gear 313 is directly transmitted to the first output half shaft 314 through the third clutch 316.

When the third clutch 316 is configured to control engagement or disengagement between the differential housing 311 and the second output half shaft 315, the second output half shaft 315 is locked together with the differential housing 311 when the third clutch 316 is in an engaged state. Therefore, the second output half shaft 315 cannot rotate relative to the differential housing 311, which also prevents the differential gear 312 from rotating (i.e., rotation on its own axis). Therefore, the differential housing 311, differential gear 312, first differential reduction driven gear 313, first output half shaft 314, and second output half shaft 315 are fixed integrally, and differential action cannot be achieved. This allows the power input from the first differential reduction driven gear 313 to be directly transmitted to the first output half shaft 314 through the third clutch 316, the second output half shaft 315, and the differential gear 312.

In the above, when the second clutch 2 and the third clutch 316 are in an engaged state, and the fourth clutch 4, the sixth clutch 6 and the first clutch 33 are in a disengaged state, the first wheel end 210 is driven by the second motor 7, and the second wheel end 220 is driven by the first motor 8. Therefore, the first wheel end 210 and the second wheel end 220 constitute a distributed structure. When the first clutch 33 is in an engaged state and the third clutch 316 and the second clutch 2 are in a disengaged state, the first wheel end 210 and the second wheel end 220 can be driven by the second motor 7 to achieve single-motor drive functions. Of course, when the fourth clutch 4 and the first clutch 33 are in an engaged state, and the third clutch 316 and the second clutch 2 are in a disengaged state, the first wheel end 210 and the second wheel end 220 can be driven by one or more of the first motor 8, the second motor 7 and the engine 1. Similarly, when the sixth clutch 6 and the first clutch 33 are in an engaged state, and the fourth clutch 4, the third clutch 316 and the second clutch 2 are in a disengaged state, the first wheel end 210 and the second wheel end 220 can also be driven by one or more of the first motor 8, the second motor 7 and the engine 1.

The output shaft of the second motor 7 is provided with a differential reduction input shaft gear 71. The power system further includes a first intermediate shaft 91, a differential reduction drive gear 92, and an intermediate driven gear 93. The differential reduction drive gear 92 and the intermediate driven gear 93 are each fixed on the first intermediate shaft 91. The differential reduction drive gear 92 meshes with the first differential reduction driven gear 313, and the intermediate driven gear 93 meshes with the differential reduction input shaft gear 71, thereby achieving connection between the second motor 7 and the first transmission component 31.

The diameter of the differential reduction input shaft gear 71 is smaller than the diameter of the differential reduction drive gear 92, such that when the power of the second motor 7 is transmitted to the first transmission component 31, the differential reduction input shaft gear 71, the intermediate driven gear 93 and the differential reduction drive gear 92 form a speed reduction structure to achieve speed reduction and torque increase.

In other embodiments, the differential reduction input shaft gear 71 may also directly mesh with the first differential reduction driven gear 313.

Specifically, the output end of the sixth clutch 6 is provided with a first gear 61, which is rotatably connected to the second intermediate shaft 94. A third gear 93 is fixed on the power input shaft 11. The first gear 61 meshes with the third gear 93 to achieve connection between the sixth clutch 6 and the power input shaft 11.A fourth gear 96 is fixed on the second intermediate shaft 94. The fourth gear 96 meshes with the first differential reduction driven gear 313 to achieve connection between the second intermediate shaft 94 and the first differential reduction driven gear 313. The output end of the fourth clutch 4 is provided with a second gear 41, which is rotatably connected to the power input shaft 11. The second gear 41 meshes with the first differential reduction driven gear 313 to achieve connection between the first transmission component 31 and the fourth clutch 4.

In one embodiment, the fifth clutch 5 is provided with an input shaft gear 51, and the output shaft of the first motor 8 is provided with an eighth gear 81. The eighth gear 81 meshes with the input shaft gear 51 to achieve transmission connection between the first motor 8 and the power input shaft 11. Further, the input shaft gear 51 is disposed on the fifth clutch 5 to reduce the length of the power input shaft 11 in the axial direction. The diameter of the eighth gear 81 is smaller than that of the input shaft gear 51, such that when the first motor 8 outputs power, the eighth gear 81 and the input shaft gear 51 form a speed reduction structure, thereby achieving speed reduction and torque increase of the first motor 8. When the engine 1 drives the first motor 8 to generate electricity, the effect of speed increase and torque reduction is achieved, thereby reducing the size of the first motor 8.

The first clutch 33 and the second clutch 2 are not engaged at the same time, and the third clutch 316 is synchronized with the second clutch 2. When the third clutch 316 and the second clutch 2 are in an engaged state, the first clutch 33 is in a disengaged state. Therefore, a distributed structure is formed between the first transmission component 31 and the second transmission component 32. When the third clutch 316 and the second clutch 2 are in a disengaged state, the first clutch 33 is in an engaged state, thereby enabling one or more of the first motor 8, the second motor 7 and the engine 1 to jointly drive the first wheel end 210 and the second wheel end 220 to rotate.

In the above, working modes of the power system include a single-motor pure electric drive mode, a dual-motor pure electric drive mode (gear 1), a dual-motor pure electric drive mode (gear 2), a dual-motor distributed pure electric drive mode, a parking generation mode, a series mode, a hybrid parallel mode (gear 1), a hybrid parallel mode (gear 2), an engine direct drive mode (gear 1), an engine direct drive mode (gear 2), a single-motor energy recovery mode, a dual-motor distributed energy recovery mode, a single-motor pure electric escape mode, a dual-motor pure electric escape mode (gear 1), a dual-motor pure electric escape mode (gear 2), and a dual-motor pure electric distributed escape mode.

When the power system is in the single-motor pure electric drive mode, the first clutch 33 is in an engaged state, the second motor 7 works, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321.

When the power system is in the dual-motor pure electric drive mode (gear 1), the fourth clutch 4 and the first clutch 33 are in an engaged state, the sixth clutch 6, the second clutch 2, and the third clutch 316 are in a disengaged mode, the first motor 8 and the second motor 7 work, the power of the first motor 8 is transmitted to the first output half shaft 314 and the second output half shaft 315 through the power input shaft 11, the fourth clutch 4, the first differential reduction driven gear 313, and the differential gear 312, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321, thereby enabling the first motor 8 and the second motor 7 to jointly drive the first wheel end 210 and the second wheel end 220 to rotate.

When the power system is in the dual-motor pure electric drive mode (gear 2), the sixth clutch 6 and the first clutch 33 are in an engaged state, the fourth clutch 4, the second clutch 2, and the third clutch 316 are in a disengaged mode, the first motor 8 and the second motor 7 work, the power of the first motor 8 is transmitted to the first output half shaft 314 and the second output half shaft 315 through the power input shaft 11, the sixth clutch 6, the second intermediate shaft 94, the first differential reduction driven gear 313, and the differential gear 312, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321, thereby enabling the first motor 8 and the second motor 7 to jointly drive the first wheel end 210 and the second wheel end 220 to rotate.

When the power system is in the dual-motor distributed pure electric drive mode, the third clutch 316 and the second clutch 2 are in an engaged state, the sixth clutch 6, the fourth clutch 4 and the first clutch 33 are in a disengaged state, the first motor 8 and the second motor 7 work, the power of the first motor 8 is transmitted to the second wheel end 220 through the power input shaft 11, the seventh gear 21 and the power output shaft 321, the power of the second motor 7 is transmitted to the first wheel end 210 through the first differential reduction driven gear 313, the third clutch 316 and the first output half shaft 314, such that the first motor 8 drives the second wheel end 220 to rotate and the second motor 7 drives the first wheel end 210 to rotate.

When the power system is in the parking generation mode, the fifth clutch 5 is in an engaged state, and the engine 1 drives the first motor 8 to generate electricity through the fifth clutch 5 and the power input shaft 11.

When the power system is in the series mode, the fifth clutch 5 and the first clutch 33 are in an engaged state, the sixth clutch 6, the fourth clutch 4, the second clutch 2 and the third clutch 316 are in a disengaged mode, the engine 1 and the second motor work, the engine 1 drives the first motor 8 to generate electricity through the fifth clutch 5 and the power input shaft 11, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321.

When the power system is in the hybrid parallel mode (gear 1), the fifth clutch 5, the fourth clutch 4, and the first clutch 33 are in an engaged state, the sixth clutch 6, the second clutch 2, and the third clutch 316 are in a disengaged mode, the engine 1 and the second motor 7 work, the power of the engine 1 is transmitted to the first output half shaft 314 and the second output half shaft 315 through the fifth clutch 5, the power input shaft 11, the fourth clutch 4, the first differential reduction driven gear 313, and the differential gear 312, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321, thereby enabling the engine 1 and the second motor 7 to jointly drive the first wheel end 210 and the second wheel end 220 to rotate. In this mode, the first motor 8 may be in a power generation state or in a driving state.

When the power system is in the hybrid parallel mode (gear 2), the fifth clutch 5, the sixth clutch 6, and the first clutch 33 are in an engaged state, the fourth clutch 4, the second clutch 2, and the third clutch 316 are in a disengaged mode, the engine 1 and the second motor 7 work, the power of the engine 1 is transmitted to the first output half shaft 314 and the second output half shaft 315 through the fifth clutch 5, the power input shaft 11, the sixth clutch 6, the second intermediate shaft 94, the first differential reduction driven gear 313, and the differential gear 312, the power of the second motor 7 is transmitted to the first output half shaft 314 and the second output half shaft 315 through the first differential reduction driven gear 313 and the differential gear 312, the first output half shaft 314 drives the first wheel end 210 to rotate, and the second output half shaft 315 drives the second wheel end 220 to rotate through the first clutch 33 and the power output shaft 321, thereby enabling the engine 1 and the second motor 7 to jointly drive the first wheel end 210 and the second wheel end 220 to rotate. In this mode, the first motor 8 may be in a power generation state or in a driving state.

When the power system is in the engine direct drive mode (gear 1), the fifth clutch 5, the fourth clutch 4, and the first clutch 33 are in an engaged state, and the sixth clutch 6, the second clutch 2, and the third clutch 316 are in a disengaged mode, the engine 1 works, the power of the engine 1 is transmitted to the first output half shaft 314 and the second output half shaft 315 through the fifth clutch 5, the power input shaft 11, the fourth clutch 4, the first differential reduction driven gear 313, and the differential gear 312, the first output half shaft 314 drives the first wheel end 210 to rotate, and the second output half shaft 315 drives the second wheel end 220 to rotate through the first clutch 33 and the power output shaft 321, thereby enabling the engine 1 and the second motor 7 to jointly drive the first wheel end 210 and the second wheel end 220 to rotate.

When the power system is in the engine direct drive mode (gear 2), the fifth clutch 5, the sixth clutch 6, and the first clutch 33 are in an engaged state, the fourth clutch 4, the second clutch 2, and the third clutch 316 are in a disengaged mode, the power of the engine 1 is transmitted to the first output half shaft 314 and the second output half shaft 315 through the fifth clutch 5, the power input shaft 11, the sixth clutch 6, the second intermediate shaft 94, the first differential reduction driven gear 313, and the differential gear 312, the first output half shaft 314 drives the first wheel end 210 to rotate, and the second output half shaft 315 drives the second wheel end 220 to rotate through the first clutch 33 and the power output shaft 321, thereby enabling the engine 1 and the second motor 7 to jointly drive the first wheel end 210 and the second wheel end 220 to rotate.

When the power system is in the single-motor energy recovery mode, the first clutch 33 is in an engaged state, the first wheel end 210 drives the first output half shaft 314 to rotate, and the second wheel end 220 drives the second output half shaft 315 to rotate through the power output shaft 321 and the first clutch 33. This allows the power on the first output half shaft 314 and the second output half shaft 315 to be transmitted to the second motor 7 through the differential gear 312 and the first differential reduction driven gear 313, so as to drive the second motor 7 to generate electricity.

When the power system is in the dual-motor distributed energy recovery mode, the third clutch 316 and the second clutch 2 are in an engaged state, the sixth clutch 6, the fourth clutch 4 and the first clutch 33 are in a disengaged mode, the first wheel end 210 drives the second motor 7 to generate electricity through the first output half shaft 314, the third clutch 316 and the first differential reduction driven gear 313, and the second wheel end 220 drives the first motor 8 to generate electricity through the power output shaft 321, the seventh gear 21 and the power input shaft 11.

When the power system is in the single-motor pure electric escape mode, the first clutch 33 and the third clutch 316 are in an engaged state, the second motor 7 works, and the power of the second motor 7 is transmitted to the first output half shaft 314 and the second output half shaft 315 through the first differential reduction driven gear 313 and the third clutch 316, the first output half shaft 314 drives the first wheel end 210 to rotate, and the second output half shaft 315 drives the second wheel end 220 to rotate through the first clutch 33 and the power output shaft 321. In this working mode, the differential gear 312 cannot rotate. Therefore, a large amount of power can be output to drive the vehicle to move.

When the power system is in the dual-motor pure electric escape mode (gear 1), the first clutch 33, the third clutch 316, and the fourth clutch 4 are in an engaged state, and the sixth clutch 6 and the second clutch 2 are in a disengaged mode, the first motor 8 and the second motor 7 work, the power of the first motor 8 is transmitted to the first output half shaft 314 and the second output half shaft 315 through the power input shaft 11, the fourth clutch 4, the first differential reduction driven gear 313, and the third clutch 316, the power of the second motor 7 is transmitted to the first output half shaft 314 and the second output half shaft 315 through the first differential reduction driven gear 313 and the third clutch 316, the first output half shaft 314 drives the first wheel end 210 to rotate, and the second output half shaft 315 drives the second wheel end 220 to rotate through the first clutch 33 and the power output shaft 321, thereby enabling the first motor 8 and the second motor 7 to jointly drive the first wheel end 210 and the second wheel end 220 to rotate. The differential gear 312 cannot rotate. Therefore, a large amount of power can be output to drive the vehicle to move.

When the power system is in the dual-motor pure electric escape mode (gear 2), the sixth clutch 6, the first clutch 33, the third clutch 316 are in an engaged state, and the fourth clutch 4 and the second clutch 2 are in a disengaged mode, the first motor 8 and the second motor 7 work, the power of the first motor 8 is transmitted to the first output half shaft 314 and the second output half shaft 315 through the power input shaft 11, the sixth clutch 6, the second intermediate shaft 94, the first differential reduction driven gear 313, and the third clutch 316, the power of the second motor 7 is transmitted to the first output half shaft 314 and the second output half shaft 315 through the first differential reduction driven gear 313 and the third clutch 316, the first output half shaft 314 drives the first wheel end 210 to rotate, and the second output half shaft 315 drives the second wheel end 220 to rotate through the first clutch 33 and the power output shaft 321, thereby enabling the first motor 8 and the second motor 7 to jointly drive the first wheel end 210 and the second wheel end 220 to rotate. The differential gear 312 cannot rotate. Therefore, a large amount of power can be output to drive the vehicle to move.

When the power system is in the dual-motor pure electric distributed escape mode, the third clutch 316 and the second clutch 2 are in an engaged state, the sixth clutch 6, the fourth clutch 4 and the first clutch 33 are in a disengaged state, the first motor 8 and the second motor 7 work, the power of the first motor 8 is transmitted to the second wheel end 220 through the power input shaft 11, the seventh gear 21, the second clutch 2 and the power output shaft 321, and the power of the second motor 7 is transmitted to the first wheel end 210 through the first differential reduction driven gear 313, the third clutch 316 and the first output half shaft 314.

In the above dual-motor pure electric escape mode (gear 1), dual-motor pure electric escape mode (gear 2), and dual-motor pure electric distributed escape mode, the engine 1 may output power together with the first motor 8, or the engine 1 may replace the first motor 8 to output power.

The specific working modes of the power system are shown in the table below:

| No. | Working mode | Engine | First motor | Second motor | Fifth clutch | Second clutch | First clutch | Third clutch | Fourth clutch | Sixth clutch |
|---|---|---|---|---|---|---|---|---|---|---|
| 1 | Single-motor pure electric drive mode | | | Drive | / | Disengaged | Engaged | Disengaged | Disengaged | Disenga ged |
| 2 | Dual-motor pure electric drive mode (gear 1) | | Drive | Drive | Disengaged | Disengaged | Engaged | Disengaged | Engaged | Disengaged |
| 3 | Dual-motor pure electric drive mode (gear 2) | | Drive | Drive | Disengaed | Disengaged | Engaged | Disengaged | Disengaged | Engaged |
| 4 | Dual-motor distributed pure electric drive mode | | Drive | Drive | Disengaged | Engaged | Disengaged | Engaged | Disengaged | Disengaged |
| 5 | Parking generation mode | Working | Power generatio n | | Engaged | Disenga ged | / | / | Disenga ged | Disengag ed |
| 6 | Series mode | Working | Power generation | Drive | Engaged | Disengaged | Engaged | Disengaged | Disengaged | Disengaged |
| 7 | Hybrid parallel mode (gear 1) | Working | | Drive | Engaged | Disengaged | Engaged | Disengaged | Engaged | Disengaged |
| 8 | Hybrid parallel mode (gear 2) | Working | | Drive | Engaged | Disengaged | Engaged | Disengaged | Disengaged | Engaged |
| 9 | Engine direct drive mode (gear 1) | Working | | | Engaged | Disengaged | Engaged | Disengaged | Engaged | Disengaged |
| 10 | Engine direct drive mode (gear 2) | Working | | | Engaged | Disengaged | Engaged | Disengaged | Disengaged | Engaged |
| 11 | Single-motor energy recovery mode | | | Power generation | / | Disengaged | Engaged | / | Disengaged | Disengaged |
| 12 | Dual-motor distributed energy recovery mode | | Power generation | Power generation | Disengaged | Engaged | Disengaged | Engaged | Disengaged | Disengaged |
| 13 | Single-motor pure electric escape mode | | | Drive | / | Disengaged | Engaged | Engaged | Disengaged | Disengaged |
| 14 | Dual-motor pure electric escape mode (gear 1) | | Drive | Drive | Disengaged | Disengaged | Engaged | Engaged | Engaged | Disengaged |
| 15 | Dual-motor pure electric escape mode (gear 2) | | Drive | Drive | Disengaged | Disengaged | Engaged | Engaged | Disengaged | Engaged |
| 16 | Dual-motor pure electric distributed escape mode | | Drive | Drive | Disengaged | Engaged | Disengaged | Engaged | Disengaged | Disengaged |

In the table above, "/" indicates that the corresponding clutch may be in an engaged or disengaged state, but in the present application, the disengaged state is preferred.

The power systems described in Embodiments 1, 2, 3, and 4 above utilize the advantages of dual-motors that are compatible with series, parallel or range-extending modes, and also adding the function of distributed electric drive, giving the vehicle good power performance and fuel economy. At the same time, by utilizing the engine to work in the optimal high-efficiency range, the vehicle driving range is increased. By integrating the series and parallel modes and distributed electric drive into a single power architecture, the functions of two power modules are realized, and the assembly structure is more compact. The dual motors are arranged side by side in the X direction, and the smaller axial dimension of the assembly is conducive to the platform layout of the vehicle. The system has the lower cost and can be expanded to more application scenarios for the vehicle. The hybrid system features distributed drive functions, which enhances the vehicle's ultimate handling performance, reduces the vehicle turning radius, and enables electronic differential control. Dual-motor pure electric drive can be applied to extreme power surfaces on closed roads to unleash strong power and has more stable handling performance. Compared to dual-motor distributed pure electric drive, it has a longer range and better fuel economy.

When the vehicle has two power systems, and at least one of the power systems is the power system described in Embodiments 1, 2, 3, and 4 above, and when one of the power systems is used for driving, the second clutch, first clutch, and third clutch of the power system described in Embodiments 1, 2, 3, and 4 above can be switched to the disengaged state, such that only the first output half shaft connected to the first wheel end and the power output shaft connected to the second wheel end rotate, and other parts do not rotate, thereby eliminating gear drag loss, permanent magnet motor idling loss, and high-speed field weakening loss.

It should be appreciated that those of ordinary skill in the art can make equivalent substitutions or changes to the technical solution and inventive concept of the present disclosure, and all such changes or substitutions should fall within the protection scope of the present disclosure.

## Claims

1. A power system, **characterized by** comprising:
an engine and a power input shaft, the power input shaft being connected to the engine;
a first motor in transmission connection with the power input shaft;
a differential assembly comprising a first transmission component, a second transmission component, and a first clutch, wherein the first clutch is connected to the first transmission component and the second transmission component, respectively, the first clutch is configured to control engagement or disengagement of the first transmission component and the second transmission component, the first transmission component is connected to an external first wheel end, and the second transmission component is connected to an external second wheel end;
a second clutch connected to each of the power input shaft and the second transmission component, wherein the second clutch is configured to control power supply and disconnection between the power input shaft and the second transmission component; and
a second motor in transmission connection with the first transmission component.

2. The power system according to claim 1, wherein
the first transmission component comprises a differential housing, a differential gear, a first differential reduction driven gear, a first output half shaft, a second output half shaft, and a third clutch, the first differential reduction driven gear is fixedly connected to the differential housing, the second motor is in transmission connection with the first differential reduction driven gear, the differential gear is rotatably connected inside the differential housing, one end of the first output half shaft meshes with the differential gear, and the other end is connected to the first wheel end, one end of the second output half shaft meshes with the differential gear, and the other end is connected to the first clutch; and
the third clutch is disposed on the differential housing and engages with one of the first output half shaft and the second output half shaft.

3. The power system according to claim 1, wherein
the first motor is disposed on one circumferential side of the differential assembly, and the second motor is disposed on the other circumferential side of the differential assembly; and
an axial direction of the first motor is parallel to an axial direction of the second motor.

4. The power system according to claim 3, wherein
the first motor and the second motor overlap at least partially in the axial directions.

5. The power system according to claim 1, wherein
the second transmission component comprises a power output shaft and a second differential reduction driven gear, one end of the power output shaft is connected to the first clutch, and the other end is connected to the second wheel end, and the second differential reduction driven gear is fixedly connected to the power output shaft and is in transmission connection with the second clutch.

6. The power system according to any one of claims 1-5, wherein
the power system further comprises:
a fourth clutch connected to the power input shaft and the first transmission component, wherein the fourth clutch controls engagement or disengagement of the power input shaft and the first transmission component.

7. The power system according to claim 6, wherein based on that the first transmission component comprises the differential housing, the differential gear, the first differential reduction driven gear, the first output half shaft, the second output half shaft, and the third clutch, and the third clutch is disposed on the differential housing and engages with one of the first output half shaft and the second output half shaft, the fourth clutch is connected to the first differential reduction driven gear.

8. The power system according to claim 6, wherein
the second clutch is disposed on the power input shaft, the second clutch and the fourth clutch share a clutch housing, making the second clutch and the fourth clutch constitute a dual clutch, and the clutch housing of the dual clutch is fixedly connected to the power input shaft.

9. The power system according to any one of claims 1-5, wherein the power system further comprises:
a fifth clutch connected to the power input shaft and the engine, wherein the fifth clutch is configured to control engagement or disengagement of the engine and the power input shaft.

10. The power system according to claim 9, wherein
the fifth clutch comprises a fifth clutch housing and a fifth clutch brake component, wherein the fifth clutch housing is fixedly connected to the power input shaft, and the fifth clutch brake component is movably connected inside the fifth clutch housing and connected to the engine; and
the fifth clutch housing is provided with an input shaft gear, an output shaft of the first motor is provided with an eighth gear, and the eighth gear meshes with the input shaft gear.

11. The power system according to claim 1, wherein the first motor is disposed on the power input shaft.

12. The power system according to claim 11, wherein the power system further comprises a third intermediate shaft, a fifth gear and a sixth gear, the fifth gear and the sixth gear are each fixed on the third intermediate shaft, the fifth gear is in transmission connection with the second clutch, and the sixth gear is in transmission connection with the second transmission component.

13. A power system, **characterized by** comprising:
an engine and a power input shaft, the power input shaft being connected to the engine;
a first motor in transmission connection with the power input shaft;
a differential assembly comprising a first transmission component, a second transmission component, and a first clutch, wherein the first clutch is connected to the first transmission component and the second transmission component, the first clutch is configured to control engagement or disengagement of the first transmission component and the second transmission component, the second transmission component is connected to an external second wheel end, and the first transmission component is connected to an external first wheel end;
a second clutch connected to the power input shaft and the second transmission component, and configured to control engagement or disengagement of the power input shaft and the second transmission component;
a fourth clutch connected to the power input shaft and the first transmission component, wherein the fourth clutch is configured to control power supply and disconnection between the power input shaft and the first transmission component;
a sixth clutch connected to the first transmission component and the power input shaft, wherein the sixth clutch is configured to control engagement or disengagement of the first transmission component and the power input shaft; and
a second motor connected to the first transmission component.

14. The power system according to claim 13, wherein
the first transmission component comprises a differential housing, a differential gear, a first differential reduction driven gear, a first output half shaft, a second output half shaft, and a third clutch, the first differential reduction driven gear is fixedly connected to the differential housing, the second motor and the fourth clutch are each in transmission connection with the first differential reduction driven gear, the differential gear is rotatably connected inside the differential housing, one end of the first output half shaft is connected to the differential gear, and the other end is connected to the first wheel end, one end of the second output half shaft is connected to the differential gear, and the other end is connected to the first clutch; and
the third clutch is disposed on the differential housing and engages with one of the first output half shaft and the second output half shaft.

15. The power system according to claim 14, wherein
the second transmission component comprises a power output shaft, and the power output shaft is connected to the first clutch and the first wheel end; and
the second clutch is connected to the power output shaft, the second clutch is provided with a second differential reduction driven gear, and the second differential reduction driven gear is in transmission connection with the power input shaft.

16. The power system according to claim 14, wherein
the power system further comprises a second intermediate shaft and a first gear, the second intermediate shaft is connected to the first differential reduction driven gear; the sixth clutch is fixedly connected to the second intermediate shaft, the first gear is fixedly connected to an output end of the sixth clutch, a second gear is rotatably connected to the power input shaft, and a third gear is fixedly connected to the power input shaft, the third gear meshes with the first gear and the second differential reduction driven gear, and the second gear is fixedly connected to the fourth clutch and meshes with the first differential reduction driven gear.

17. The power system according to any one of claims 14-16, wherein
an output shaft of the second motor is provided with a differential reduction input shaft gear; and
the power system further comprises a first intermediate shaft, a differential reduction drive gear, and an intermediate driven gear, the differential reduction drive gear and the intermediate driven gear are each fixed on the first intermediate shaft, the differential reduction drive gear meshes with the first differential reduction driven gear, and the intermediate driven gear meshes with the differential reduction input shaft gear.

18. The power system according to any one of claims 13-16, wherein the power system further comprises:
a fifth clutch connected to the power input shaft and the engine, wherein the fifth clutch is configured to control engagement or disengagement of the engine and the power input shaft.

19. The power system according to claim 18, wherein
the fifth clutch comprises a fifth clutch housing and a fifth clutch brake component, the fifth clutch housing is fixedly connected to the power input shaft, and the fifth clutch brake component is movably connected inside the fifth clutch housing and connected to the engine; and
the fifth clutch housing is provided with an input shaft gear, an output shaft of the first motor is provided with an eighth gear, and the eighth gear meshes with the input shaft gear.

20. A vehicle, **characterized by** comprising a vehicle body, a power system, a second wheel end, and a first wheel end, wherein the power system is mounted on the vehicle body, the power system is the power system of any one of claims 1-12 or the power system of any one of claims 13-19, the second wheel end is connected to the first transmission component of the power system, and the first wheel end is connected to the second transmission component of the power system.
